Europäisches Patentamt

European Patent Office

Office européen des brevets

(19)

(11) Publication number: **0 229 027 B1**

# EUROPEAN PATENT SPECIFICATION

(12)

(45) Date of publication of patent specification: **19.11.92**   (51) Int. Cl.5: **H04N 5/45**

(21) Application number: **87300044.2**

(22) Date of filing: **06.01.87**

(54) **Television receivers.**

(30) Priority: **06.01.86 JP 464/86**

(43) Date of publication of application:
**15.07.87 Bulletin  87/29**

(45) Publication of the grant of the patent:
**19.11.92 Bulletin  92/47**

(84) Designated Contracting States:
**DE FR GB NL**

(56) References cited:

**PATENT ABSTRACTS OF JAPAN, vol. 6, no. 21 (E-93)[899], 6th February 1982; & JP-A-56 140 775 (SHARP K.K.) 04-11-1981**

**PATENT ABSTRACTS OF JAPAN, vol. 5, no. 78 (E-58)[120], 22nd May 1981; & JP-A-56 27 573 (SONY K.K.) 17-03-1981**

**PATENT ABSTRACTS OF JAPAN, vol. 3, no. 121 (E-143), 11th October 1979;& JP-A-54 98 116 (SHARP K.K.) 02-08-1979**

(73) Proprietor: **SONY CORPORATION
7-35 Kitashinagawa 6-chome Shinagawa-ku
Tokyo 141(JP)**

(72) Inventor: **Hakamada, Kunio c/o Patents Division
Sony Corporation 6-7-35 Kitashinagawa
Shinagawa-ku Tokyo 141(JP)**
Inventor: **Inashima, Satoshi c/o Patents Division
Sony Corporation 6-7-35 Kitashinagawa
Shinagawa-ku Tokyo 141(JP)**
Inventor: **Terada, Kiyoshi c/o Patents Division
Sony Corporation 6-7-35 Kitashinagawa
Shinagawa-ku Tokyo 141(JP)**

(74) Representative: **Cotter, Ivan John et al
D. YOUNG & CO. 10 Staple Inn
London WC1V 7RD(GB)**

EP 0 229 027 B1

## Description

This invention relates to television receivers.

A so-called picture-in-picture television receiver, in which a sub-picture is displayed on a subpicture screen inset within a main picture screen, has been previously proposed.

As will be described hereinbelow, this picturein-picture television receiver includes a memory to reproduce a sub-picture on the sub-picture screen. By controlling writing in and reading out of the memory, the television receiver is capable of reproducing a picture on the sub-picture screen as a real moving picture or as a still picture.

This picture-in-picture television receiver also has separate circuits for generating a main picture signal and a sub-picture signal so that a cathode ray tube thereof can independently display, on the main and sub-picture screens, pictures based on video signals from different video signal sources. The pictures displayed on the sub-picture screen can be real moving pictures or still pictures and can be the same as or different from the picture being displayed on the main picture screen.

The viewer controls what is to be displayed by means of an operation key. However, it is inconvenient, confusing to the viewer, and expensive to provide separate operation keys for each of the separate circuits for generating the main and sub-picture signals.

Further, the television receiver and a remote controller therefore each have only a limited space in which operation keys used for various control operations can be mounted. There is then a problem that it is difficult to increase the number of operation keys.

According to one aspect of the present invention there is provided a television receiver in which a sub-picture can be displayed on a sub-picture screen inset within a main picture screen on which a main picture is displayed, the receiver comprising common operation control means operable for selectively causing the display on the subpicture screen of a still picture taken from a main picture video signal or a still picture taken from a subpicture video signal, characterised in that when the still picture is taken from the main picture video signal a new still picture is displayed each time that the common operation control means is operated, whereas when the still picture is taken from the sub-picture video signal, the display of a still picture and display of a moving picture are alternately carried out each time that the common operation control means is operated.

With a television receiver embodying the present invention, it is possible positively and conveniently to reproduce the main picture and the sub-picture as still pictures by using the common or single operation control means.

The invention will now be further described, by way of illustrative and non-limiting example; with reference to the accompanying drawings, in which like references designate like elements and parts throughout, and in which:

Figure 1 is a block diagram showing the overall arrangement of a television receiver embodying the present invention;

Figure 2 is a flow chart to which reference is made in explaining the operation of the television receiver shown in Figure 1; and

Figures 3A to 3H are schematic representations for explaining the operation of the television receiver shown in Figure 1.

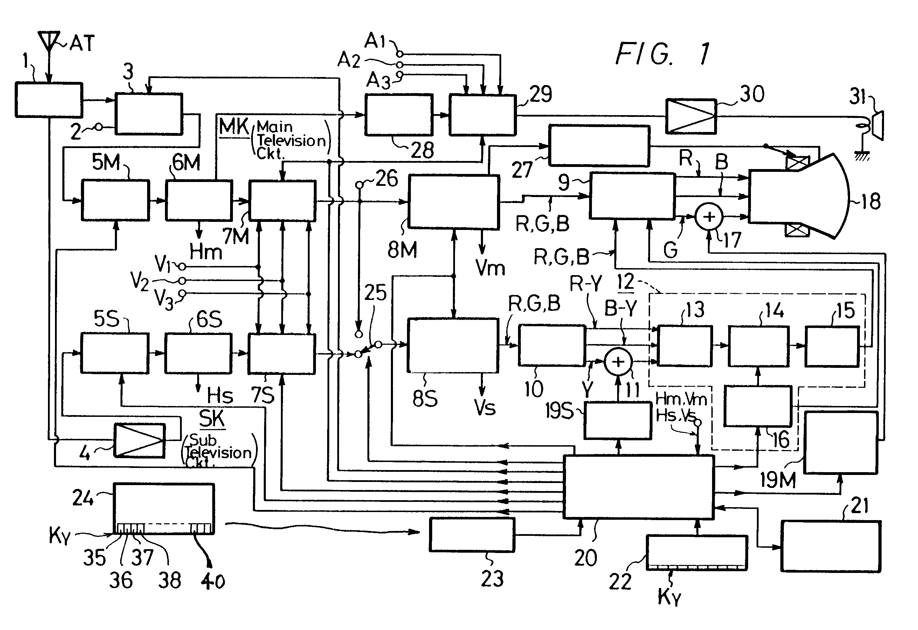

Figure 1 is a block diagram showing the overall circuit arrangement of a television receiver embodying the present invention. The television receiver includes a main television circuit MK and a sub-television circuit SK. A video signal supplied by the main television circuit MK causes a main picture to be displayed on the whole of a picture screen of a cathode ray tube 18, whereas a video signal supplied by the sub-television circuit SK causes a sub-picture to be displayed on a portion of the main picture screen in such a manner that the sub-picture is inset into the main picture. The main and sub-television circuits MK and SK include main and sub-tuners 5M, 5S; main and sub-video intermediate frequency circuits 6M, 6S and main and sub-video/chroma signal circuits 8M, 8S, respectively.

The television receiver is provided with external video signal input terminals V1, V2 and V3 to which reproduced video signals (base band signals) can be supplied from video tape recorder (VTR) or the like. Selection of the video signals from the external input terminals V1, V2 and V3, in place of the video signals from the tuners 5M and 5S, can be effected by the main and the sub-switching circuits 7M and 75 provided in the television circuits MK and SK. The signal selected by the switching circuit 7M is then supplied to the cathode ray tube 18 to be displayed on its picture screen.

The sub-television circuit SK includes a video signal processor circuit 12 for displaying the subpicture on the picture screen of the cathode ray tube 18. The video signal processor circuit 12 controls the kinds of sub-picture or sub-pictures (such as live picture, a still picture, a step-by-step picture or the like), the number of sub-pictures, the position of the sub-picture on the main picture screen, and so forth. The expression "live" picture means that the displayed image is animated (moving) rather than static.

The main and sub-television circuits MK and SK are provided with respective main and subcharacter display circuits 19M and 19S to display picture discriminating indications on the main picture screen and the sub-picture screen in an inset fashion. Each such picture discrimination indication may, for example, comprise the channel identification (for instance the channel number) of a received television broadcast or the number of an external video signal input terminal.

The television receiver includes a system controller or control circuit 20 which includes a microcomputer. Respective sections of the television receiver are controlled by the system controller 20 as will be explained in greater detail hereinbelow.

The circuit arrangement of the television receiver will now be described more fully. A television broadcast signal received by an aerial (antenna) AT is supplied to a distributor 1. The distributor 1 supplies the received signal through a switching circuit 3 to the main tuner 5M, without substantially attenuating the signal, and also supplies a portion of the received signal to the sub-tuner 5S. The received signal portion is amplified by a high frequency amplifier 4 before it is applied to the sub-tuner 5S. The switching circuit 3 selectively switches between the aerial input signal from the distributor 1, and a high frequency input from a descrambler used for receiving a cable television broadcast or the like and supplied to an auxiliary input terminal 2, and supplies one of the signals to the main tuner 5M.

The video signal from the main tuner 5M is supplied to the main video intermediate frequency circuit 6M and a video intermediate frequency signal is supplied therefrom to the main switching circuit 7M which can be selectively switched between this video signal and the external video signals from the external video input terminals V1 to V3. The signal selected by the switching circuit 7M is supplied to the main video/chroma signal circuit 8M. A monitor output terminal 26 is connected to the output side of the main switching circuit 7M. The main video/chroma signal circuit 8M generates red, green and blue colour signals R, G and B which are fed to a switching circuit 9.

An audio intermediate frequency signal from the main video intermediate frequency circuit 6M is supplied to an audio circuit (incorporating a sound multiplexing decoder circuit) 28. An audio signal from the audio circuit 28 is supplied to a switching circuit 29 which can be selectively switched between this audio signal and external audio signals reproduced from a VTR or the like and supplied thereto from external audio signal input terminals A1, A2 and A3, respectively, corresponding to the external video signal input terminals V1, V2 and V3. The audio signal selected by the switching circuit 29 is supplied through a low frequency amplifier 30 to a loudspeaker 31.

Horizontal and vertical synchronising signals from the main video/chroma signal circuit 8M are supplied to a deflection/high voltage circuit 27. A deflection signal and a high d̄c̄ voltage from the circuit 27 are supplied to the cathode ray tube 18.

The video signal from the sub-tuner 5S is supplied to the sub-video intermediate frequency circuit 6S and a video intermediate frequency signal is supplied therefrom to the sub-switching circuit 7S which selectively switches between this video signal and the external video signals from the external video signal input terminals V1 to V3. A switch 25 effects selection between the video signal selected by the switching circuit 7S and the video signal from the main switching circuit 7M and supplies the chosen video signal to the sub-video/chroma signal circuit 8S. The sub-video/chroma signal circuit 8S generated red, green and blue colour signals R, G and B which are supplied to a matrix circuit 10 in which they are converted to a luminance signal Y and red and blue colour difference signals R-Y and B-Y, respectively, which are then fed to an analog-to-digital (A/D) converter 13 in the video signal processor circuit 12.

The A/D converter 13 is a time division type A/D converter as disclosed, for example, in Japanese Patent Application Publication No. JP-A-60-47792. A digital signal from the A/D converter 13 is supplied to a memory 14 and written therein. The digital signal is read out from the memory 14 and supplied to a ditial-to-analog (D/A) converter 50 so as thereby to be converted to an analog signal. In the video signal processor circuit 12, sampling lines and picture elements of the video signal are selected and other lines and picture elements are thrown away or removed in correspondence with the ratio between the sizes of the main picture screen and the sub-picture screen. The memory 14 has frame (or field) memory areas corresponding to the maximum number of displayable sub-pictures, for example four frame memory areas. The memory 14 is controlled by as sub-picture controller or control circuit 16 so as to specify the kinds of sub-picture or sub-pictures (such as a live picture, a still picture, a step-by-step picture and so on), the number of sub-pictures, the position of the sub-picture on the main picture and the like.

When the sub-picture is displayed as a live picture, that is a real moving picture, the video signal is alternately written in and read out from the memory 14 continuously and repeatedly; when the sub-picture is displayed as a still picture, the video signal is written in the memory 14 for a selected frame or field period and then read out from the memory 14 repeatedly; and when the sub-picture is displayed as a step-by-step picture, a plurality of video signals are written in the memory 14 at different times corresponding to different frames or field periods and then read out thereform repeatedly (see Japanese Patent Application Publication No. JP-A-56-27573). The number of sub-picture screens inset into the main picture screen is determined on the basis of the number of memory areas in the memory 14 which are used. The contents or picture of the sub-picture screen can be a real moving picture, a still picture or a step-by-step picture based on the video signal from the sub-video/chroma signal circuit 8S or the video signal from the main video/chroma signal circuit 8M. The switching of these video signals is carried out by the switch 25. The picture contents on the main picture screen and the sub-picture screen can be exchanged with each other by simultaneously switching the reception channels of the main and sub-tuners 5M and 5S or by simultaneously switching the main and sub-switching circuits 7M and 7S.

The respective colour signals from the main/video chroma signal circuit 8M and the respective colour signals from the D/A converter 15 are supplied to the switching circuit 9 in which both groups of respective colour signals are switched at appropriate timing intervals such that the sub-picture screen is inset into one portion of the main picture screen at a selected, predetermined position. The switching circuit 9 is controlled by the sub-picture controller 16, which is controlled by the system controller 20. The vide signal from the switching circuit 9 is supplied to the cathode ray tube 18.

The main picture discrimination indicating signal, such as a signal indicative of the main channel number, is formed by the main character display circuit 19M and is added to the video signal by an adder 17 connected between the switching circuit 9 and the cathode ray tube 18. In this example, the adder 17 is interposed only in the transmission path of the green colour signal G to thereby superimpose a green picture discrimination indication upon the main picture screen. It is of course possible for this picture discrimination indication to be made by using other colours.

The sub-picture discrimination indicating signal, which is formed by the sub-character display circuit 19S and which could be indicative of the channel number selected by the sub-tuner, 5S, for example, is added to the sub-video signal by an adder 11 connected between the matrix circuit 10 and the A/D converter 13. In this example, the adder 11 is interposed only in the transmission path of the luminance signal Y to thereby superimpose a white picture discrimination indication on the sub-picture screen. However, it is possible for this picture discrimination indication to be made by using other colours.

Channel selections in the main tuner 5M and sub-tuner 5S are carried out by channel selection signals from the system controller 20. The switching circuits 3, 7M, 7S, 29 and the switch 25 are also selectively switched under the control of the system controller 20. The main and sub-video/chroma signal circuits 8M and 8S are subjected to blanking by the system controller 20 for a short period upon up and down scanning channel selection operation. Alternatively, such blanking may be carried out by a blanking switch that is provided at a stage before the cathode ray tube 18. Further, main and sub-horizontal synchronising signals Hm and Hs from the main and sub-video intermediate frequency circuits 6M and 6S and main and sub-vertical blanking signals (vertical signals) Vm and Vs from the main and sub-video/chroma signal circuits 8M and 8S are supplied to the system controller 20. The main picture and sub-picture discrimination indicating signal circuits 19M and 19S and the sub-picture controller 16 are controlled by the system controller 20.

A last-condition memory 21 stores, under the control of the system controller 20, the selected channels of the main and sub-tuners 5M and 5S, the switch conditions of the switching circuits 7M and 7S, the control conditions of the sub-picture controller 16 and so on when power to the television receiver is turned off. When the television receiver is turned on again, the conditions of the respective circuits present when the television receiver was last turned off are displayed under the control of the system controller 20.

A key apparatus 22 is connected to the system controller 20 and is provided with various kinds of keys KY to control the television receiver.

A remote controller (commander) 24 also is provided with various kinds of keys KY to control the television receiver. The remote controller 24 is also provided with a transmitter (not shown) to transmit a remote cotnrol signal based on the corresponding key operation. A receiver 23 for receiving the signal transmitted from the transmitter of the remote controller 24 is connected to the system controller 20. The remote control and so on.

By way of example, the keys KY of the key apparatus 22 or the remote controller 24 may comprise: a power key; a recall key (used to display the picture discrimination indication such as the channel number); a mute key (used to mute the sound); ten keys (designated generally by the reference numeral 35) used to select the reception channel and the number of the external video signal input terminal; a TV (television)/VTR change-over key; an aerial input/auxiliary high frequency input change-over key; a sound multiplexing key; up and down keys 36 for incrementing and decrementing the contrast of luminance and chrominance signals, the main reception channels, the number of the main external video signal input terminal, and the sound volume, respectively; an on-off key 37 for the sub-picture screen; up and down keys 38 for incrementing and decrementing the sub-reception channel and the number of the sub-external video signal input terminal; a still picture key (still picture reproducing key) 40; a step-by-step picture key; a shift key used to shift the position of the sub-picture screen; and a main-sub exchange key used to exchange the picture contents on the main picture and sub-picture screens.

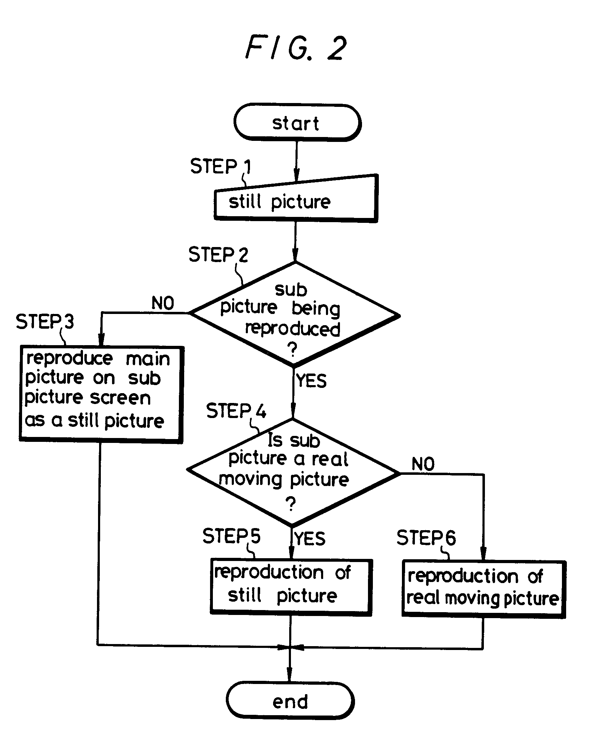

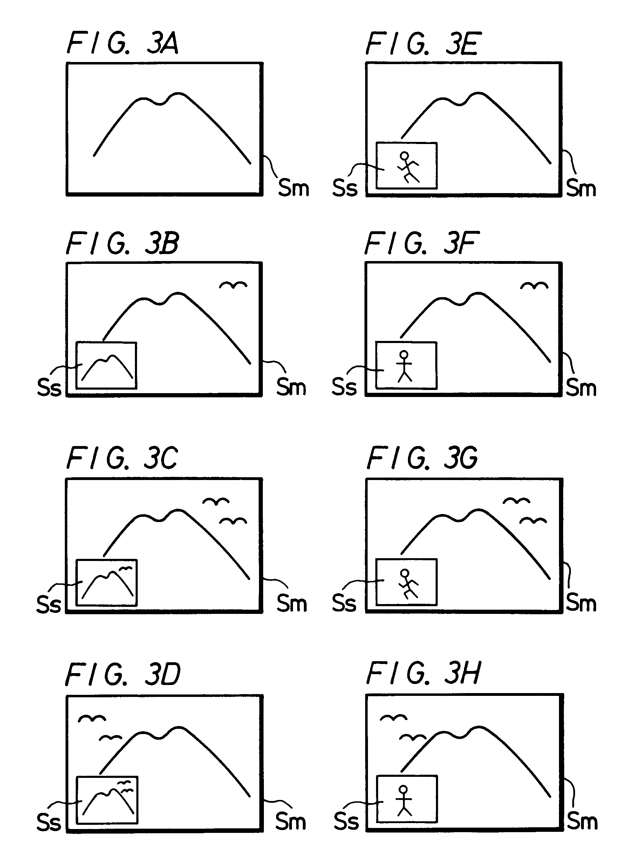

A still picture reproducing operation performed by the television reciever embodying the present invention will now be described with reference to Figure 2 and Figures 3A to 3H.

Referring to the flow chart of Figure 2, when the still picture key 40 on the remote controller 24 is depressed at a step 1, the system controller determines at a step 2 whether or not a sub-picture is being reproduced or displayed by the television receiver.

If the still picture key 40 is depressed when only a main picture screen 5M is displayed on the cathode ray tube 18, as shown in Figure 3A, the system controller 20 will cause the switch 25 to be switched on the state or position opposite to the state or position shown in Figure 1 so that the video signal from the main switching circuit 7M is supplied through the sub-video/chroma signal circuit 8S and the matrix circuit 10 to the video signal processor circuit 12. As a result, the video signal present when the still picture key 40 was depressed is written into the memory 14 for the particular frame period or field period which was coincident with the actuation of the still picture key 40. No further signals are written into the memory 40 until the still picture key 40 is depressed again. As noted above, the video signal in the memory 14 is read out repeatedly; thus, the main picture present when the still picture key 40 was depressed is displayed on a sub-picture screen Ss, as a still picture, as shown in Figure 3B. This corresponds to a step 3 shown in Figure 2.

While watching the real moving picture displayed on this main picture screen Sm, the viewer can again depress the still picture key 40 at a selected (arbitrarily or otherwise) point in time to capture in the memory 14 a new still picture from the moving main picture. In the manner described above, the new still picture captured from the main picture is displayed on the sub-picture screen Ss as a new still picture while the main picture is continously displayed on the main picture screen Sm as a real moving picture, as shown in Figure 3C. In a like manner, each time the still picture key 40 is depressed, the still picture displayed on the sub-picture screen Ss is renewed, as shown in Figure 3D.

When the switch 25 is in the state or position shown in Figure 1 so that the video signal from the sub-switching circuit 7S is supplied to the video signal processor circuit 12, the main picture is displayed on the main picture screen Sm and, simultaneously, a sub-picture based on a video signal from a signal source different from that of the main picture is displayed on the sub-picture screen Ss, as shown in Figure 3E. If the still picture key 40 is depressed (at the step 1 shown in Figure 2), the system controller 20 determines at the step 2 whether or not the sub-picture is being displayed. Further, the system controller 20 determines at a step 4 whether the sub-picture being displayed is a real moving picture or not.

When the sub-picture is displayed as a real moving picture, the system controller 20, at a step 5, causes the video signal supplied from the sub-switching circuit 7S when the still picture key 40 was depressed to be written in the memory 14 for a particular frame period or field period which is coincident with the activation of the still picture key 40, as described above. The writing into the memory 14 is then stopped. The system controller 20 causes the video signal present when the still picture key 40 was depressed to be repeatedly read out of the memory 14 and displayed on the sub-picture screen Ss as a still picture, as shown in Figure 3F.

If, however, the still picture key 40 is depressed when the sub-picture is a still picture (see a step 6 shown in Figure 2), the writing of the video signal in the memory 14 is started again and, also, the video signal is sequentially read out from the memory 14 and displayed on the sub-picture screen Ss as a real moving picture, as shown in Figure 3G.

When the user depresses the still picture key 40 while watching a real moving picture on the sub-picture screen Ss, a still picture from the moving sub-picture is captured in the memory 14 at the instant when the still picture key 40 is depressed and is displayed on the sub-picture screen Ss as shown in Figure 3H (similar to the step 5).

According to the embodiment of the present invention described above, when the still picture key 40 is depressed while a sub-picture is being displayed, if the sub-picture is a still picture it is changed to a real moving picture, whereas if the sub-picture is a real moving picture it is changed to a still picture. Accordingly, if the still picture key 40 is repeatedly depressed the display on the sub-picture screen of a still picture and a real moving picture are alternately and repeatedly carried out at every operation of the still picture key 40 so that the pictures displayed on the sub-picture screen Ss can be positively distinguished from the case in which a still picture taken from the main picture screen is displayed on the sub-picture screen.

The main picture is continuously displayed as a real moving picture, regardless of the fact that the sub-picture is changed from a still picture to a real moving picture and vice versa.

According to the embodiment of the present invention described above, the main picture or the sub-picture can be displayed as a still picture on the sub-picture screen by simply depressing the still picture key 40 when the main picture is displayed or when the main picture and the sub-picture are displayed simultaneously, respectively. Thus, it becomes possible to obtain a picture-in-picture television receiver which does not cause the user to become confused when using the still picture feature.

## Claims

1. A television receiver in which a sub-picture can be displayed on a sub-picture screen (Ss) inset within a main picture screen (Sm) on which a main picture is displayed, the receiver comprising common operation control means (14, 20, 40) operable for selectively causing the display on the sub-picture screen (Ss) of a still picture taken from a main picture video signal or a still picture taken from a subpicture video signal, characterised in that when the still picture is taken from the main picture video signal, a new still picture is displayed each time that the common operation control means (14, 30, 40) is operated, whereas when the still picture is taken from the sub-picture video signal, the display of a still picture and display of a moving picture are alternately carried out each time that the common operation control means (14, 20, 40) is operated.

2. A television receiver comprising:

   (a) a cathode ray tube (18) having a picture screen which is divisible into a main picture screen (Sm) and at least one sub-picture screen (Ss) inset into the main picture screen (Sm);

   (b) a main picture circuit (7M, 8M) for selecting a first video signal from a plurality of video signals (5M, $V_1$, $V_2$, $V_3$) and supplying the selected video signal for the main picture screen (Sm);

   (c) a sub-picture circuit (7S, 25, 8S) for selecting a second video signal from a plurality of video signals (5S, $V_1$, $V_2$, $V_3$) and supplying the selected video signal as a sub-picture video signal for a sub-picture screen (Ss), the sub-picture circuit (7S, 25, 8S) including memory means (14) for storing one or more frames of one of the said selected video signal and repeatedly reading out one or more stored frames as the sub-picture video signal;

   (d) a composing circuit (9) for composing the selected video signal for the main picture screen (Sm) and the selected video signal for the sub-picture screen (Ss) into a composite signal to be supplied to the cathode ray tube (18); and

   (e) system controller means for controlling the operation of the main picture circuit (7M, 8M) and the sub-picture circuit (7S, 25, 8S), the system controller means including viewer controllable still picture means (20, 40) for selectively choosing which one of the first video signal and the second video signal is to be input to the memory means (14) and output therefrom to be displayed on a sub-picture screen (Ss) as a moving picture or a still picture depending upon whether a single frame is written once into and repeatedly read out of the memory means (14) or a continuous series of frames is written into and read out of the memory means (14), characterised in that, when the first video signal is chosen, a new still picture is displayed each time that the still picture means (20, 40) is operated, whereas when the second video signal is chosen, display of a still picture and display of a moving picture are alternately carried out each time that the still picture means (20, 40) is operated.

## Patentansprüche

1. Fernsehempfänger, bei dem ein Nebenbild auf einem Nebenbild-Bildschirm (Ss) angezeigt werden kann, der in einen Hauptbild-Bildschirm (Sm), auf welchem ein Hauptbild angezeigt wird, eingesetzt ist, wobei der Empfänger gemeinsame Betriebssteuermittel (15, 20, 40) umfaßt, die zum wahlweisen Bewirken der Anzeige eines Stehbildes auf dem Nebenbild-Bildschirm (Ss), das einem Hauptbild-Videosignal entnommen wird, oder eines Stehbildes, das einem Nebenbild-Videosignal entnommen wird, betreibbar sind, dadurch **gekennzeichnet, daß** wenn das Stehbild dem Hauptbild-Videosignal entnommen wird, ein neues Stehbild jedesmal dann angezeigt wird, wenn die gemeinsamen Betriebssteuermittel (14, 30, 40) betätigt werden, wohingegen wenn das Stehbild dem Nebenbild-Videosignal entnommen wird, die Anzeige eines Stehbildes und die Anzeige eines bewegten Bildes abwechselnd jedesmal dann ausgeführt werden, wenn die gemeinsamen Betriebssteuermittel (14, 20, 40) betätigt werden.

**2.** Fernsehempfänger, der umfaßt:

(a) eine Kathodenstrahlröhre (18), die einen Bildschirm hat, der in einen Hauptbild-Bildschirm (Sm) und zumindest einen Nebenbild-Bildschirm (Ss), der in den Hauptbild-Bildschirm (Sm) eingesetzt ist, unterteilbar ist,

(b) eine Hauptbild-Schaltung (7M, 8M) zum Auswählen eines ersten Videosignals aus einer Vielzahl von Videosignalen (5M, $V_1$, $V_2$, $V_3$) und zum Liefern des ausgewählten Videosignals für den Hauptbild-Bildschirm (Sm),

(c) eine Nebenbild-Schaltung (7S, 25, 8S) zum Auswählen eines zweiten Videosignals aus einer Vielzahl von Videosignalen (5S, $V_1$, $V_2$, $V_3$) und zum Liefern des ausgewählten Videosignals als ein Nebenbild-Videosignal für einen Nebenbild-Bildschirm (Ss), wobei die Nebenbild-Schaltung (7S, 25, 8S) ein Speichermittel (14) zum Speichern eines oder mehrerer Teilbilder von einem der ausgewählten Videosignale und zum wiederholten Auslesen eines oder mehrerer gespeicherter Teilbilder als das Nebenbild-Videosignal enthält,

(d) eine Zusammensetzungs-Schaltung (9) zum Zusammensetzen des ausgewählten Videosignals für den Hauptbild-Bildschirm (Sm) und des ausgewählten Videosignals für den Nebenbild-Bildschirm (Ss) zu einem zusammengesetzten Signal, das der Kathodenstrahlröhre (18) zuzuführen ist, und

(e) ein Systemsteuermittel zum Steuern des Betriebs der Hauptbild-Schaltung (7M, 8M) und der Nebenbild-Schaltung (7S, 25, 8S), wobei das Systemsteuermittel eine durch den Betrachter steuerbare Stehbild-Einrichtung (20, 40) zum wahlweisen Auswählen enthält, welches von dem ersten Videosignal und von dem zweiten Videosignal dem Speichermittel einzugeben ist und aus diesem auszugeben ist, das auf einem Nebenbild-Bildschirm (Ss) als ein bewegtes Bild oder ein Stehbild abhängig davon anzuzeigen ist, ob ein einziges Teilbild einmal in das Speichermittel (14) eingeschrieben und wiederholt aus diesem ausgelesen wird oder ob eine Dauerfolge von Teilbildern in das Speichermittel (14) eingeschrieben und aus diesem ausgelesen wird,

dadurch **gekennzeichnet,** daß wenn das erste Videosignal ausgewählt wird, ein neues Stehbild jedesmal dann angezeigt wird, wenn die Stehbild-Einrichtung (20, 40) betätigt wird, wohingegen wenn das zweite Videosignal ausgewählt wird, die Anzeige eines Stehbildes und die Anzeige eines bewegten Bildes abwechselnd jedesmal dann ausgeführt werden, wenn die Stehbild-Einrichtung (20, 40) betätigt wird.

## Revendications

**1.** Un récepteur de télévision dans lequel une image auxiliaire peut être visualisée sur un écran d'image auxiliaire (Ss) qui est incrusté dans un écran d'image principale (Sm) sur lequel une image principale est visualisée, le récepteur comprenant des moyens de commande de fonctionnement communs (14, 20, 40) que l'on peut actionner pour commander sélectivement la visualisation sur l'écran d'image auxiliaire (Ss) d'une image fixe qui est obtenue à partir d'un signal vidéo d'image principale, ou d'une image fixe qui est obtenue à partir d'un signal vidéo d'image auxiliaire, caractérisé en ce que lorsque l'image fixe est obtenue à partir du signal vidéo d'image principale, une nouvelle image fixe est visualisée chaque fois que les moyens de commande de fonctionnement communs (14, 30, 40) sont actionnés, tandis que lorsque l'image fixe est obtenue à partir du signal vidéo d'image auxiliaire, la visualisation d'une image fixe et la visualisation d'une image mobile sont accomplies en alternance, chaque fois que les moyens de commande de fonctionnement communs (14, 20, 40) sont actionnés.

**2.** Un récepteur de télévision comprenant :

(a) un tube cathodique (18) ayant un écran d'image que l'on peut diviser en un écran d'image principale (Sm) et au moins un écran d'image auxiliaire (Ss) incrusté dans l'écran d'image principale (Sm);

(b) un circuit d'image principale (7M, 8M) qui est destiné à sélectionner un premier signal vidéo parmi un ensemble de signaux vidéo (5M, $V_1$, $V_2$, $V_3$), et à fournir le signal vidéo sélectionné pour l'écran d'image principale (Sm);

(c) un circuit d'image auxiliaire (7S, 25, 8S) qui est destiné à sélectionner un second signal vidéo parmi un ensemble de signaux vidéo (5S, $V_1$, $V_2$, $V_3$), et à fournir le signal vidéo sélectionné, sous la forme d'un signal vidéo d'image auxiliaire pour un écran d'image auxiliaire (Ss), le circuit d'image auxiliaire (7S, 25, 8S) comprenant des moyens de mémoire (14) qui sont destinés à enregistrer une ou plusieurs images de l'un des signaux vidéo sélectionnés, et à lire de façon répétée une ou plusieurs images enregistrées, à titre de signal vidéo d'image auxiliaire;

(d) un circuit de combinaison (9) destiné à combiner en un signal composite le signal vidéo sélectionné pour l'écran d'image principale (Sm) et le signal vidéo sélectionné pour l'écran d'image auxiliaire (Ss), ce signal composite étant appliqué au tube cathodique (18) ; et

(e) des moyens de commande de système qui sont destinés à commander le fonctionnement du circuit d'image principale (7M, 8M) et le circuit d'image auxiliaire (7S, 25, 8S), les moyens de commande de système comprenant des moyens de sélection d'image fixe pouvant être commandés par le téléspectateur (20, 40), qui permettent de choisir sélectivement le signal particulier, parmi le premier signal vidéo et le second signal vidéo, qui doit être appliqué aux moyens de mémoire (14) et émis par ceux-ci pour être visualisé sur un écran d'image auxiliaire (Ss), sous la forme d'une image animée ou d'une image fixe, selon qu'une seule image a été écrite une fois et est lue de façon répétée dans les moyens de mémoire (14), ou qu'une série continue d'images est écrite et lue dans les moyens de mémoire (14), caractérisé en ce que, lorsque le premier signal vidéo est choisi, une nouvelle image fixe est visualisée chaque fois que les moyens de sélection d'image fixe (20, 40) sont actionnés, tandis que lorsque le second signal vidéo est choisi, la visualisation d'une image fixe et la visualisation d'une image mobile sont accomplies en alternance chaque fois que les moyens de sélection d'image fixe (20, 40) sont actionnés.

FIG. 1

EP 0 229 027 B1

# FIG. 2

```
                    ┌──────────┐
                    │  start   │
                    └────┬─────┘
                         │
  STEP 1                 ▼
        ┌─────────────────────────┐
        │    still  picture       │
        └───────────┬─────────────┘
                    │
  STEP 2            ▼
                  ╱sub╲
          NO   ╱ picture  being ╲
      ◄───────◄   reproduced    ►
      │        ╲      ?        ╱
      │           ╲        ╱
  STEP 3              │ YES
      ▼               ▼
┌─────────────┐   STEP 4
│reproduce main│        ╱Is sub╲
│picture on sub│     ╱ picture a real ╲   NO
│picture screen│    ◄  moving picture  ►─────┐
│as a still picture│  ╲      ?        ╱      │
└──────┬──────┘        ╲        ╱            │
       │         STEP 5   │ YES    STEP 6    │
       │                  ▼                  ▼
       │         ┌──────────────┐   ┌────────────────┐
       │         │reproduction of│   │reproduction of │
       │         │ still  picture│   │real moving picture│
       │         └───────┬──────┘   └────────┬───────┘
       │                 │                   │
       └─────────────────┼───────────────────┘
                         ▼
                    ┌──────────┐
                    │   end    │
                    └──────────┘
```

FIG. 3A

FIG. 3E

FIG. 3B

FIG. 3F

FIG. 3C

FIG. 3G

FIG. 3D

FIG. 3H